# EUROPEAN PATENT APPLICATION

(11) **EP 4 786 072 A1**
(43) Date of publication of application: **05.08.2026**
(21) Application number: 24872164.9
(22) Date of filing: 24.09.2024
(51) Int. Cl.: B22F 1/00, B22F 10/28, B22F 10/34, B22F 10/36, B22F 10/64, B33Y 10/00, B33Y 70/00, B33Y 80/00, C21D 6/00, C22C 38/00, C22C 38/14

(54) **MARAGING STEEL POWDER FOR ADDITIVE FABRICATION, MARAGING STEEL ADDITIVELY FABRICATED ARTICLE, AND METHOD FOR MANUFACTURING SAME**

(30) Priority: 26.09.2023 JP 2023164005
(71) Applicant: Proterial, Ltd., Tokyo 135-0061 (JP)
(72) Inventor: SAITO Daiki, Tokyo 135-0061 (JP); FUKUZAWA Norihide, Tokyo 135-0061 (JP); SAITO Kazuya, Tokyo 135-0061 (JP); FUKUMOTO Shiho, Tokyo 135-0061 (JP)
(74) Representative: Becker, Eberhard
(86) International application number: PCT/JP2024/033896
(87) International publication number: WO 2025/070373

(57) **Abstract**

Provided is a maraging steel powder from which it is possible to obtain, while reducing Co as much as possible, an additively fabricated article having excellent thermal fatigue life characteristics and exhibiting little deformation after being shaped. Provided are: a maraging steel powder for additive fabrication comprising, in mass%, no more than 0.02% C, 0.1-0.3% Si, 16-20% Ni, no more than 0.1% Co, 2.7-3.5% Mo, 1.5-2.5% Ti, and no more than 0.01% Al, the remaining portion being Fe and unavoidable impurities; and a maraging steel additively fabricated article comprising no more than 0.02% C, 0.1-0.3% Si, 16-20% Ni, no more than 0.1% Co, 2.7-3.5% Mo, 1.5-2.5% Ti, and no more than 0.01% Al, the remaining portion being Fe and unavoidable impurities.

## Description

### Technical Field

The invention relates to a maraging steel powder for additive manufacturing, a maraging steel additively manufactured product, and a method for manufacturing a maraging steel additively manufactured product.

### Related Art

Recently, additive manufacturing methods have drawn attention as a means for easily forming metal products (parts) having complex shapes in a near-net shape. Additive manufacturing methods refer to additive manufacturing technologies, which are generally also referred to as 3D printing. As types of the additive manufacturing method, for example, there are a powder spray method in which metal powder is irradiated with a heat source to melt and stack the powder and a powder bed method in which metal powder spread on a stage is irradiated with a heat source to be melted and solidified and such operation is repeated to stack layers. According to the additive manufacturing method, metal products having complex shapes can be produced with significant omission of conventional machining processes, so metal materials that are difficult to machine can be used. Since metal materials that are difficult to machine are also exclusively high-strength metal materials, metal products having complex shapes and long durability life can be produced. One application for near-net processing with such complex three-dimensional shape is die casting mold.

A representative example of the high-strength metal material is maraging steel. Maraging steel is, for example, an age-hardening type ultra-high-strength steel in which age-hardening elements such as Co, Mo, Ti, and Al are added to steel containing approximately 18 mass% of Ni. Since maraging steel also excels in toughness, by using maraging steel as a material for various tools and structural parts, the life of the products can be effectively improved. An additively manufactured product produced by the additive manufacturing method using maraging steel as a metal material has been proposed (Patent Document 1).

Maraging steel powder excels in strength and toughness in both as-molded and after aging treatment conditions, and is therefore suitable for additive manufacturing of the die casting mold. As maraging steel used for such mold applications, 300 kilopound-force per square inch (ksi) grade maraging steel is known, and the general composition thereof is Fe-18%Ni-9%Co-5%Mo.

On the other hand, In the case where the powder bed method is used for additive manufacturing, there is a possibility that powder and dust may be released into the atmosphere from the powder to molding, and particularly powder and dust with Co added require management to suppress the influences on human health. In addition, since the addition of Co leads to increased costs, low-Co maraging steel powder is required. For example, the applicant of the present application has proposed a powder for additive manufacturing made of maraging steel having a composition of, in mass%, C: 0.1% or less, Ni: 14% to 22%, Co: 0% to 5%, Mo: 0.1% to 15.0%, Ti: 0.1% to 5.0%, Al: 3.0% or less, and the remainder: Fe and impurities. The powder described in Patent Document 2 having the above-described alloy composition can reduce Ti segregation and can improve the toughness of maraging steel additively manufactured product (Patent Document 2).

In addition, as a common issue for articles manufactured by additive manufacturing (additively manufactured products), the occurrence of distortion due to residual stress is known. As a method for suppressing such distortion in carbon steel and martensitic stainless steel that undergo martensitic transformation, for example, a technique has been proposed in which distortion in additively manufactured products is alleviated by performing temperature adjustment using a temperature control mechanism of an additive manufacturing apparatus between multiple layers of the additively manufactured product, taking into consideration the martensite transformation start temperature (Ms point) of the raw material powder (Patent Document 3).

### [Prior Art Document(s)]

### [Patent Document(s)]

Patent Document 1: International Publication No. WO 2011/149101
Patent Document 2: Japanese Patent Application Laid-Open Publication No. 2020-45567
Patent Document 3: Japanese Patent No. 6295001

### SUMMARY OF INVENTION

### Technical Problem

In the case of an additive manufacturing apparatus that does not have a temperature control mechanism as proposed in Patent Document 3, deformation or cracking may occur in the additively manufactured product due to strain caused by thermal shrinkage of the material during molding. Particularly in low-Co maraging steel with Co of less than 1%, the deformation amount tends to be larger when compared to a general 300 ksi grade product, so further suppression of the deformation amount is required.
On the other hand, as a property required in die casting molds, examples may include resistance to crack occurrence due to thermal fatigue (improvement of thermal fatigue life). In order to obtain a mold with good thermal fatigue life, a mold material having good high-temperature strength and good ductility and toughness at room temperature of the material (tempered material) obtained by heat treating the additively manufactured product after molding is required. Therefore, the objective of the invention is to provide a maraging steel powder that can obtain an additively manufactured product with less deformation after additive manufacturing even when Co is reduced as much as possible and with excellent thermal fatigue life characteristics, and an additively manufactured product made therefrom.

### Solution to Problem

The invention has been made in view of the above.
That is, an aspect of the invention provides a maraging steel powder for additive manufacturing, which includes: in mass%, C: 0.02% or less, Si: 0.04% to 0.3%, Ni: 16% to 20%, Co: 0.1% or less, Mo: 2.7% to 3.5%, Ti: 1.5% to 2.5%, Al: 0.01% or less, and remainder: Fe and unavoidable impurities.
In addition, another aspect of the invention provides a maraging steel additively manufactured product that includes: in mass%, C: 0.02% or less, Si: 0.04% to 0.3%, Ni: 16% to 20%, Co: 0.1% or less, Mo: 2.7% to 3.5%, Ti: 1.5% to 2.5%, Al: 0.01% or less, and remainder: Fe and unavoidable impurities.
In addition, another aspect of the invention provides a method for manufacturing a maraging steel additively manufactured product that includes: a powder layer forming process of paving the maraging steel powder for additive manufacturing in a layered manner; and a melting and solidification process of sequentially melting the paved maraging steel powder for additive manufacturing by using a scanning heat source having a diameter larger than D50 of the maraging steel powder for additive manufacturing and solidifying to form a solidified layer. The powder layer forming process and the melting and solidification process are repeated to obtain an additively manufactured product.

### Effects of Invention

According to the invention, an additively manufactured product with less deformation after additive manufacturing and excellent thermal fatigue life characteristics can be obtained even when Co is reduced as much as possible.

### BRIEF DESCRIPTION OF DRAWINGS

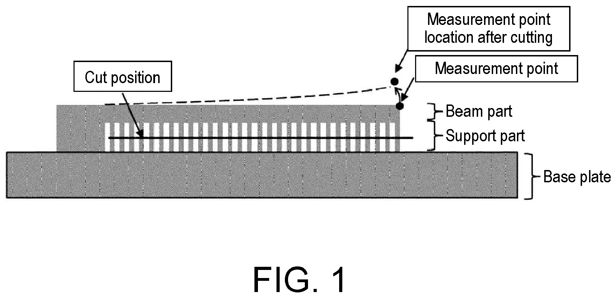

[FIG. 1] FIG. 1 is a schematic diagram of a warpage measurement test piece used for strain evaluation.

### DESCRIPTION OF EMBODIMENTS

The invention has a composition including C: 0.02% or less, Si: 0.04% to 0.3%, Ni: 16% to 20%, Co: 0.1% or less, Mo: 2.7% to 3.5%, Ti: 1.5% to 2.5%, Al: 0.01% or less, and the remainder: Fe and unavoidable impurities. First, the reasons for limiting the composition of the maraging steel for additive manufacturing specified in the invention are described. Unless otherwise specified, "%" represents "mass%".

### Carbon (C): 0.02% or less

In order to obtain a high-toughness low-carbon martensite structure, which is a characteristic of maraging steel, C needs to be limited to 0.02% or less. When C exceeds 0.02%, the toughness in the as-molded state (a state in which heat treatment is not performed after additive manufacturing) decreases, and cracking may occur due to strain caused by thermal shrinkage. Preferably, C is 0.01% or less. On the other hand, C can also be used as a deoxidizer in the melting process, and since it is a manufacturing difficulty for C to be non-added, the lower limit can be set to, for example, 0.001%.

### Silicon (Si): 0.04% to 0.3%

Si is an element that improves strength, and the content is set to 0.04% or more. On the other hand, an excessive addition of Si reduces the toughness of the tempered material necessary for improving thermal fatigue life characteristics, so the content of Si is set to at most 0.3%. In order to further improve toughness, the upper limit of the content of Si is preferably set to 0.2%, and more preferably set to 0.15%.

### Nickel (Ni): 16% to 20%

Ni is a fundamental element necessary for establishing maraging steel, which forms intermetallic compounds with Ti, Al, Mo, and the like and improves the strength. For this reason, in the invention, the content of Ni is set to 16% or more. A preferable lower limit of the content of Ni is 17%. On the other hand, when the content of Ni is too high, the austenite structure is stabilized, making it difficult to form a martensite structure. For this reason, in the invention, the content of Ni is set to 20% or less. A preferable upper limit of the content of Ni is 19%.

### Cobalt (Co): 0.1% or less

In the invention, the content of Co is reduced in consideration of the ease of management related to the influences on human health and the fact that Co itself is expensive. Furthermore, in the invention, it is found that by making the content of Co, which has an effect of lowering the solid solubility limit of Mo, extremely low at 0.1% or less, the effect of improving the toughness of the tempered material is exhibited. This is considered to be because the toughness necessary for thermal fatigue life characteristics is improved by reducing excessive precipitation of Mo-based intermetallic compounds. A preferable upper limit is 0.05%, and a more preferable upper limit is 0.01%. It is ideal to make Co non-added (0%), but since non-addition is a manufacturing difficulty, the lower limit can be set to, for example, 0.0005%.

### Molybdenum (Mo): 2.7% to 3.5%

Mo is an element that has an effect of improving the strength and improving thermal fatigue life by forming Ni₃Mo, which is an intermetallic compound, during aging treatment to precipitationstrengthen the metal structure, or by solid-solution-strengthening. In addition, the addition of Mo lowers the Ms point in a composition such as low-Co maraging steel. In the case of an additive manufacturing apparatus that does not have a temperature control mechanism, the temperature during molding can be near room temperature depending on the molding conditions, but if the Ms point is lowered and approaches room temperature, the effect of relaxing thermal shrinkage due to martensitic transformation expansion can be utilized to reduce the deformation due to thermal shrinkage. For this reason, in the invention, the content of Mo is preferably 2.7% or more.
On the other hand, when the content of Mo is too high, coarse intermetallic compounds are excessively formed with Fe, and the toughness of the tempered material necessary for thermal fatigue life characteristics decreases. In addition, excessive addition of Mo lowers the Ms point more than necessary, making it difficult to form a martensite structure. For this reason, in the invention, the content of Mo is preferably 3.5% or less.

### Titanium (Ti): 1.5% to 2.5%

Ti is an element that forms Ni₃Ti, which is a strengthening phase, in the structure after the aging treatment, and imparts the high-temperature strength necessary for thermal fatigue life characteristics. For this reason, in the invention, the content of Ti is 1.5% or more. In addition, for the same reason as above, the content of Ti is preferably 1.7% or more, and more preferably 1.9% or more.
On the other hand, when the content of Ti is too high, significant Ti segregation occurs in the structure during solidification, and the significant Ti segregation remains in the structure even after aging treatment, which may decrease the toughness of the tempered material necessary for thermal fatigue life characteristics. For this reason, in the invention, the content of Ti is 2.5% or less. In addition, for the same reason as above, the content of Ti is preferably 2.3% or less, and more preferably 2.1% or less. Furthermore, in the invention, in order to stably obtain the precipitation strengthening effect resulting from Mo and Ti, Ti+Mo is preferably 4.5% to 5.5%. A more preferable upper limit of Ti+Mo is 5.2%.

### Aluminum (Al): 0.01% or less

Al has an effect of forming intermetallic compounds with Ni and precipitation-strengthening the metal structure. However, when the content of Al is excessive, non-metallic inclusions may increase in the metal structure, and toughness may be reduced. Therefore, the content of Al is 0.01% or less. A preferable upper limit is 0.007%, and a more preferable upper limit is 0.005%. In addition, since the imparting of strength by intermetallic compounds can be achieved by Mo and Ti, the number of elements to be handled can be reduced and a management process in the manufacture can be omitted. While it is ideal for Al to be non-added (0%), since the non-addition of Al is a manufacturing difficulty, for example, the lower limit can also be set to 0.0001%. The invention has a basic composition that selectively includes the above element species, with the remainder of Fe and unavoidable impurities.

In addition, in the maraging steel powder for additive manufacturing of the invention, nitrogen (N) is preferably 0.030% or less in mass%. Nitrogen (N) is an element that is unavoidably incorporated into the metal powder from a raw material and from the atmosphere during the melting and powdering processes in the manufacturing process of metal powder. When the content of nitrogen (N) is too excessive, N combines with Ti, Mo, and the like in the additively manufactured product and forms a large amount of nitride. The nitride may act as a fracture initiation point and decrease the toughness of the tempered material. For this reason, in the invention, the content of nitrogen (N) is preferably 0.030% or less, more preferably 0.020% or less, and even more preferably 0.005% or less.
However, N is an element that is unavoidably incorporated in general manufacturing processes of powder for additive manufacturing such as the gas atomization method. The maraging steel powder for additive manufacturing according to an aspect of the invention can allow the inclusion of 0.001% or more of nitrogen (N) from the viewpoint of suppressing internal defects in the additively manufactured product and ensuring sufficient toughness.

In the maraging steel powder for additive manufacturing of the invention, oxygen (O) is preferably 0.040% or less. Oxygen (O) is an element that is unavoidably incorporated into the metal powder from a raw material and from the atmosphere during the melting and powdering processes in the manufacturing process of metal powder. Oxygen (O) combines with Ti and the like and forms oxide inside and on the surface of the metal powder. The oxide may act as a fracture initiation point and decrease toughness. For this reason, in the invention, the content of oxygen (O) is preferably 0.040% or less, more preferably 0.030% or less, and even more preferably 0.020% or less.

The maraging steel powder for additive manufacturing of the invention can allow the inclusion of 0.005% or more, or 0.010% or more of oxygen (O) from the viewpoint of suppressing internal defects in the additively manufactured product and ensuring sufficient toughness.

The maraging steel powder for additive manufacturing of the invention can be manufactured by, for example, the gas atomization method, water atomization method, disk atomization method, plasma atomization method, rotating electrode method, or the like. Among the methods, the gas atomization method is a method in which raw materials for melting prepared to have a desired composition is heated over the melting points thereof and melted by high-frequency induction heating, and then argon gas, nitrogen gas, or other inert gas is injected onto the molten metal that has flowed out through fine pores, thereby finely pulverizing the molten metal and rapidly solidifying the metal to obtain powder. Such gas atomization method allows the use of scrap metal, crude metal raw materials, and the like as raw materials for melting, and compared to the plasma atomization method, rotating electrode method, and the like that require preparation of raw materials having a desired composition and shape in advance, the method can be performed at a low cost and is suitable as a method for obtaining the metal powder for additive manufacturing of the invention.

The maraging steel powder for additive manufacturing of the invention preferably has a 50% particle diameter (hereinafter referred to as "D50") in the volume-based cumulative particle size distribution of 10 µm to 250 µm. By setting the D50 of the metal powder for additive manufacturing of the invention to 250 µm or less, melting of the powder becomes easier, and the formation of internal defects in the additively manufactured product can be suppressed.
In addition, by setting the D50 of the metal powder for additive manufacturing of the invention to 10 µm or more, the metal powder becomes less susceptible to the influence of moisture and the like in the atmosphere during handling and additive manufacturing, and favorable flowability can be ensured.
The cumulative particle size distribution of the powder for additive manufacturing of the invention is expressed as a cumulative volume particle size distribution, and its D50 can be expressed as a measured value by the laser diffraction scattering method specified in JIS Z 8825.

The D50 of the maraging steel powder for additive manufacturing of the invention may be adjusted by sieve classification using a mesh, air classification, or the like in combination with the methods described above. For example, for the metal powder for additive manufacturing used in the powder bed method, the metal powder is melted with a laser beam serving as a heat source, while coarse metal powder that is difficult to melt needs to be removed to narrow the range of heat influence as much as possible. In addition, fine metal powder with high adhesiveness also needs to be removed in order to achieve the optimal flowability for ensuring the laying properties of the metal powder. Therefore, in the case of applying the maraging steel powder for additive manufacturing of the invention to the powder bed method, it is preferable to adjust D50 to a range of 10 µm to 53 µm. A preferable upper limit of D50 is 40 µm, and a preferable lower limit of D50 is 20 µm.

By performing additive manufacturing of the maraging steel powder for additive manufacturing of the invention using a manufacturing method described later, a maraging steel additively manufactured product can be obtained, including, in mass%, C: 0.02% or less, Si: 0.04% to 0.3%, Ni: 16% to 20%, Co: 0.1% or less, Mo: 2.7% to 3.5%, Ti: 1.5% to 2.5%, Al: 0.01% or less, and the remainder: Fe and unavoidable impurities. Preferably, Ti+Mo is 4.5 to 5.5. The additively manufactured product has a small deformation amount due to thermal shrinkage and has excellent thermal fatigue life characteristics. The most preferable application example of the additively manufactured product is a die casting mold, but there is also a possibility of application to other molds requiring an internal cooling mechanism, such as plastic molds. In addition, it is also possible to apply the product to repair a mold using additive manufacturing by the powder spray method. Furthermore, the application is not limited to molds, and there is also a possibility of application to various other tools and component parts such as gears that use maraging steel.

Next, the manufacturing method of the invention for obtaining the additively manufactured product of the invention using the maraging steel powder of the invention will be described. The manufacturing process described below can be applied to, for example, the powder bed method.
In the manufacturing method according to the invention, a process of paving the prepared maraging steel powder for additive manufacturing of the invention (hereinafter also referred to as "metal powder") in a layered manner, and a process of forming a solidified layer by sequentially melting and solidifying the metal powder with a scanning heat source having a diameter larger than the D50 of the metal powder are performed. Then, by repeating the process of paving the metal powder in a layered manner and the process of forming the solidified layer to form multiple layered solidified layers, the additively manufactured product of the invention can be produced. For the scanning heat source, for example, a laser or an electron beam can be used. It is preferable to make the diameter of the scanning heat source larger than the D50 of the metal powder, thereby allowing the aggregate of the metal powder to be melted uniformly.

In the manufacturing method according to the invention, the laser output when irradiating the metal powder while scanning with a laser can be set to 50 W to 350 W, the scanning speed can be set to 200 mm/sec to 2000 mm/sec, and the scanning pitch can be set to 0.02 mm to 0.20 mm. Here, if the layer thickness per scan of the laser is too large, heat becomes difficult to transfer to the entire paved metal powder during laser irradiation, the metal powder is not melted sufficiently, and the generation of internal defects is facilitated. On the other hand, if the layer thickness per scan is too small, the number of layers to achieve a predetermined size of the additively manufactured product increases, and the time required for the additive manufacturing process becomes longer. For this reason, the layer thickness per scan is preferably 10 µm to 200 µm. A more preferable lower limit of the layer thickness is 20 µm, and a more preferable upper limit of the layer thickness is 100 µm.

In the manufacturing method according to the invention, in order to impart mechanical properties required for use as a metal product (part), it is preferable to apply an aging treatment to the member in the as-additively-manufactured state (a state in which heat treatment is not performed after additive manufacturing). The aging treatment for the additively manufactured product of the invention is useful in that various intermetallic compounds can be precipitated in the structure to adjust, for example, the hardness to 40 to 55 HRC, thereby obtaining more excellent high strength and high toughness. The aging treatment temperature is preferably 400°C or higher, more preferably 450°C or higher, still more preferably 500°C or higher, and even more preferably 550°C or higher. By increasing the aging treatment temperature, the effect of strength improvement due to precipitation of Ni₃Ti can be obtained. However, if the aging treatment temperature is excessively high, the intermetallic compounds become coarse, and the strength expected from the precipitation amount of intermetallic compounds cannot be sufficiently attained. Therefore, the aging treatment temperature is preferably 700°C or lower, more preferably 650°C or lower, still more preferably 640°C or lower, and even more preferably 630°C or lower. The aging treatment temperature can also be 600°C or lower.
In addition, the aging treatment time (holding time at the aging treatment temperature) is preferably 60 minutes or more, more preferably 100 minutes or more, and still more preferably 150 minutes or more. By extending the aging treatment time, the amount of various intermetallic compounds increases. However, if the aging treatment time is excessively long, the intermetallic compounds become coarse, and the strength decreases. Therefore, the aging treatment time is preferably 600 minutes or less, more preferably 400 minutes or less, and still more preferably 200 minutes or less. In addition, since the aging treatment is performed to adjust (temper) to a specific hardness while measuring the hardness as needed, the aging treatment time per session may be set within the preferable range and performed multiple times. In the heat treatment of the additively manufactured product, since the melting and rapid cooling during molding sometimes also serve as quenching treatment, unlike general melting materials, the solution treatment may be omitted and the aging treatment may be performed directly from the as-molded state. The manufacturing method of the invention has been described above, but the maraging steel powder for additive manufacturing of the invention is not limited only to the above-described manufacturing method of the invention, and can also be applied to, for example, a direct metal deposition method in which powder is directly sprayed onto a heat source and welded to a base material.

In the manufacturing method according to the invention, the solution treatment may be performed before the aging treatment for the purpose of improving mechanical properties and eliminating segregation. The solution treatment temperature is preferably 800°C or higher, more preferably 850°C or higher, still more preferably 900°C or higher, and even more preferably 950°C or higher. By increasing the solution treatment temperature, the effect of eliminating segregation formed during additive manufacturing is improved. However, if the solution treatment temperature is excessively high, prior austenite grains become coarse, and the strength and toughness of the additively manufactured product decrease. Therefore, the solution treatment temperature is preferably 1200°C or lower, more preferably 1100°C or lower, and still more preferably 1050°C or lower.
The solution treatment time (holding time at the solution treatment temperature) is preferably 10 minutes or more, more preferably 30 minutes or more, and still more preferably 45 minutes or more. By extending the solution treatment time, the effect of eliminating segregation formed during additive manufacturing is improved. However, if the solution treatment time is excessively long, the prior austenite grain size becomes coarse. Therefore, the solution treatment time is preferably 120 minutes or less, more preferably 100 minutes or less, and still more preferably 80 minutes or less. Here, among additively manufactured products, there are some that are used as composites by additive manufacturing another material on a base material. When using additively manufactured products in molds, maraging steel may be additive manufactured on general tool steel to form a composite. Tool steel is usually used after quenching, and for example, the quenching temperature of SKD61, a general hot work tool steel, is around 1000°C. When using an additively manufactured product as a composite, the quenching of tool steel and the solution treatment of maraging steel can be combined.

### Examples

### (Example 1)

After preparing each metal raw material to have the composition shown in Table 1, the materials were charged into a high-frequency induction melting furnace and melted, and the molten metal was pulverized with argon gas to obtain gas atomized powder. The obtained atomized powder was subjected to sieve classification using a mesh and air classification to adjust the particle size, thereby obtaining powder for additive manufacturing as invention examples and comparative examples having D50 of 35 µm. For each metal powder for additive manufacturing obtained above, additively manufactured products were produced using Mlab cusing 200R manufactured by GE Additive under the molding conditions shown in Table 2. Table 3 shows the composition values of the obtained additively manufactured products.

**[Table 1]**

| (mass%) | | | | | | | | | | | |
|---|---|---|---|---|---|---|---|---|---|---|---|
| Sample No. | C | Si | Ni | Mo | Co | Al | Ti | N | O | Fe 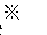 | Remarks |
| 1 | 0.005 | 0.12 | 18.2 | 2.7 | 0.005 | 0.001 | 1.99 | <0.001 | 0.0181 | Bal. | Invention |
| 2 | 0.005 | 0.12 | 18.2 | 3.3 | 0.002 | 0.001 | 1.96 | <0.001 | 0.0195 | Bal. | Example |
| 3 | 0.009 | 0.29 | 17.9 | 2.0 | 0.51 | 0.14 | 1.99 | <0.001 | 0.0272 | Bal. | Comparative Example |

| | | | | | | | | | | | |
|---|---|---|---|---|---|---|---|---|---|---|---|
| 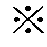 Containing unavoidable impurities | | | | | | | | | | | |

**[Table 2]**

| | Laser output [W] | Scanning speed [mm/s] | Layer thickness [µm] | Scanning pitch [mm] | Laser diameter (scanning heat source diameter) [µm] |
|---|---|---|---|---|---|
| Molding condition | 180 | 850 | 30 | 0.08 | 75 |

**[Table 3]**

| (mass%) | | | | | | | | | |
|---|---|---|---|---|---|---|---|---|---|
| Sample No. | C | Si | Ni | Mo | Co | Al | Ti | Fe 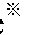 | Remarks |
| 1 | 0.005 | 0.12 | 18.1 | 2.8 | <0.01 | 0.001 | 2.01 | Bal. | Invention Example |
| 2 | 0.004 | 0.12 | 18.0 | 3.4 | <0.01 | 0.002 | 1.98 | Bal. | |
| 3 | 0.007 | 0.30 | 18.1 | 2.0 | 0.49 | 0.14 | 2.03 | Bal. | Comparative Example |

| | | | | | | | | | |
|---|---|---|---|---|---|---|---|---|---|
| 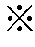 Containing unavoidable impurities | | | | | | | | | |

First, the deformation amounts of the additively manufactured products were measured. To begin with, as the additively manufactured products of the invention examples and comparative examples, cantilever-shaped test pieces shown in FIG. 1 were produced on a base plate. Next, the cut positions of the support part shown in FIG. 1 were cut by wire electrical discharge machining, and warpage was caused in the beam portions due to the accumulated strain. Accordingly, it is confirmed that the larger the warpage, the greater strain was accumulated in the additively manufactured product.
Next, the measurement point height of the end portion of the beam part with respect to the base plate was measured before and after cutting of the support part. As shown in Table 4, it is confirmed that the deformation amounts of the additively manufactured products made of Co-free maraging steel of the invention examples were less than those of the low-Co maraging steel of the comparative examples in all cases, and the additively manufactured products of the invention can suppress deformation in the as-molded state even when the content of Co is minimized.

**[Table 4]**

| Sample No. | Amount of change in measurement point height before and after cutting (deformation amount) [mm] | Remarks |
|---|---|---|
| 1 | 1.03 | Invention Example |
| 2 | 0.91 | |
| 3 | 1.37 | Comparative Example |

### (Example 2)

Next, in order to confirm the mechanical properties of the additively manufactured products, the same additively manufactured products as those produced in Example 1 were subjected to heat treatment under the conditions shown in Table 5, and tempered to hardness of 46±1 HRC and 52±1 HRC. Here, Sample Nos. 4 to 7 are Sample No. 1 of Example 1 having received the heat treatment, Sample Nos. 8 to 11 are Sample No. 2 of Example 1 having received heat treatment, and Sample Nos. 12 to 15 are Sample No. 3 having received heat treatment. For the samples having received the solution treatment, the temperature and the time were determined by assuming heat treatment that combines quenching of tool steel and solution treatment when the maraging steel was additively manufactured on general tool steel to form a composite. The aging treatment time was 3 hours per treatment. The hardness was measured by Rockwell hardness test conforming to JIS Z 2245. Tensile test pieces were taken from the horizontal direction with respect to the stacking direction of the tempered additively manufactured products, and a high-temperature tensile test at 550°C and a room-temperature tensile test at 22°C conforming to JIS Z 2241, as well as a 2 mm U-notch Charpy impact test conforming to JIS Z 2242 were conducted.

**[Table 5]**

| Sample No. | Solution treatment (1hr) | Aging treatment (3hr) | | | Actual hardness [HRC] | Remarks |
|---|---|---|---|---|---|---|
| | | 1^{st} time | 2^{nd} time | 3^{rd} time | | |
| 4 | none | 490°C | - | - | 52.1 | Invention Example |
| 5 | none | 580°C | 570°C | - | 46.4 | |
| 6 | 1020°C | 530°C | - | - | 52.4 | |
| 7 | 1020°C | 590°C | 590°C | - | 46.4 | |
| 8 | none | 500°C | - | - | 51.8 | |
| 9 | none | 590°C | - | - | 46.4 | |
| 10 | 1020°C | 530°C | 530°C | - | 52.6 | |
| 11 | 1020°C | 600°C | 590°C | - | 45.9 | |
| 12 | none | 510°C | - | - | 51.8 | Comparative Example |
| 13 | none | 595°C | - | - | 45.6 | |
| 14 | 1020°C | 540°C | - | - | 52.2 | |
| 15 | 1020°C | 600°C | 565°C | 590°C | 46.4 | |

Table 6 shows the thermal fatigue life characteristics of the 550°C-0.2% yield strength (high-temperature yield strength), room-temperature reduction, and 2 mm U-notch Charpy impact value indicating toughness for the non-solution-treated-aging-treated 52 HRC tempered material, and Table 7 shows those for the non-solution-treated-aging-treated 46 HRC tempered material. When comparing those tempered to the same hardness, the invention examples showed high-temperature yield strength and Charpy impact values over those of the comparative examples. From the above results, it is confirmed that the invention can obtain additively manufactured products having thermal fatigue life characteristics over those of conventional low-Co maraging steel under heat treatment conditions in which solution treatment is omitted.

**[Table 6]**

| Sample No. | 550°C-0.2% yield strength [MPa] | Room-temperature reduction [%] | Charpy impact value [J/cm²] | Remarks |
|---|---|---|---|---|
| 4 | 681 | 42 | 45 | Invention Example |
| 8 | 698 | 42 | 43 | |
| 12 | 616 | 42 | 37 | Comparative Example |

**[Table 7]**

| Sample No. | 550°C-0.2% yield strength [MPa] | Room-temperature reduction [%] | Charpy impact value [J/cm²] | Remarks |
|---|---|---|---|---|
| 5 | 555 | 47 | 71 | Invention Example |
| 9 | 551 | 49 | 76 | |
| 13 | 507 | 48 | 52 | Comparative Example |

Table 8 shows the thermal fatigue life characteristics of the 550°C-0.2% yield strength (high-temperature yield strength), room-temperature reduction, and 2 mm U-notch Charpy impact value indicating toughness for the solution-treated-1020°C-aging-treated 52 HRC tempered material, and Table 9 shows those for the solution-treated-1020°C-aging-treated 46 HRC tempered material. When comparing those tempered to the same hardness, the invention examples showed high-temperature yield strength and Charpy impact values over those of the comparative examples. It is confirmed that the invention can obtain additively manufactured products having thermal fatigue life characteristics over those of conventional low-Co maraging steel even under heat treatment conditions that combine quenching of tool steel and solution treatment in the case where maraging steel is additively manufactured on general tool steel to form a composite.

**[Table 8]**

| Sample No. | 550°C-0.2% yield strength [MPa] | Room-temperature reduction [%] | Charpy impact value [J/cm²] | Remarks |
|---|---|---|---|---|
| 6 | 816 | 41 | 33 | Invention Example |
| 10 | 843 | 36 | 35 | |
| 14 | 769 | 32 | 31 | Comparative Example |

**[Table 9]**

| Sample No. | 550°C-0.2% yield strength [MPa] | Room-temperature reduction [%] | Charpy impact value [J/cm²] | Remarks |
|---|---|---|---|---|
| 7 | 623 | 44 | 53 | Invention Example |
| 11 | 610 | 46 | 50 | |
| 15 | 590 | 42 | 41 | Comparative Example |

## Claims

1. A maraging steel powder for additive manufacturing, the maraging steel powder comprising: in mass%, C: 0.02% or less, Si: 0.04% to 0.3%, Ni: 16% to 20%, Co: 0.1% or less, Mo: 2.7% to 3.5%, Ti: 1.5% to 2.5%, Al: 0.01% or less, and remainder: Fe and unavoidable impurities.

2. A maraging steel additively manufactured product, comprising: in mass%, C: 0.02% or less, Si: 0.04% to 0.3%, Ni: 16% to 20%, Co: 0.1% or less, Mo: 2.7% to 3.5%, Ti: 1.5% to 2.5%, Al: 0.01% or less, and remainder: Fe and unavoidable impurities.

3. A method for manufacturing a maraging steel additively manufactured product, the method comprising:
a powder layer forming process of paving the maraging steel powder for additive manufacturing according to claim 1 in a layered manner; and
a melting and solidification process of sequentially melting the paved maraging steel powder for additive manufacturing by using a scanning heat source having a diameter larger than D50 of the maraging steel powder for additive manufacturing and solidifying to form a solidified layer,
wherein the powder layer forming process and the melting and solidification process are repeated to obtain an additively manufactured product.
